(19) Europäisches Patentamt

European Patent Office

Office européen des brevets

(11) Numéro de publication : **0 190 957**
**B1**

(12) **FASCICULE DE BREVET EUROPÉEN**

(45) Date de publication du fascicule du brevet :
07.09.88

(21) Numéro de dépôt : 86400085.6

(22) Date de dépôt : 16.01.86

(51) Int. Cl.⁴ : **B 25 J 17/02, B 23 Q 1/14**

(54) **Support d'outil en deux parties reliées élastiquement, notamment pour robot.**

(30) Priorité : 24.01.85 FR 8501013

(43) Date de publication de la demande :
13.08.86 Bulletin 86/33

(45) Mention de la délivrance du brevet :
07.09.88 Bulletin 88/36

(84) Etats contractants désignés :
DE GB IT NL SE

(56) Documents cités :
EP-A- 0 030 828
EP-A- 0 104 871
US-A- 4 338 052

(73) Titulaire : **AEROSPATIALE SOCIETE NATIONALE INDUSTRIELLE**
**37, Boulevard de Montmorency**
**F-75781 Paris Cédex 16 (FR)**

(72) Inventeur : **Dumargue, Guy**
**52 rue de Bellevue**
**F-92100 Boulogne (FR)**
Inventeur : **Hueilec, Jean-Yves**
**19bis, rue Mordillat**
**F-92260 Fontenay-aux-Roses (FR)**

(74) Mandataire : **Bonnetat, Christian et al**
**Cabinet PROPI Conseils 23 rue de Léningrad**
**F-75008 Paris (FR)**

EP 0 190 957 B1

## Description

La présente invention concerne un support d'outil, notamment pour robot.

On sait que les robots d'usinage connus manquent de précision et de rigidité, de sorte que, lorsqu'on les utilise pour des opérations d'usinage, telles que du fraisage ou du détourage, il est indispensable de guider l'outil de travail en appuyant celui-ci, ou un élément qui en est solidaire, sur un gabarit.

La présente invention a pour objet un support d'outil, notamment pour robot d'usinage, permettant de conserver le contact avec un tel gabarit, indépendamment des efforts et de l'imprécision du déplacement du robot.

On remarquera qu'un tel support d'outil doit permettre d'effectuer les opérations suivantes :
- conserver l'axe de l'outil parallèle à lui-même, en dépit de l'imprécision de déplacement du robot ;
- présenter un débattement suffisamment grand, pour simplifier la programmation par apprentissage du robot ;
- résister aux efforts de travail ;
- limiter les efforts de contact sur le gabarit ; et,
- être le plus compact possible.

A ces fins, selon l'invention, le support d'outil notamment pour robot, du type comportant deux parties reliées entre elles par un ensemble de lames élastiques qui, au repos, sont disposées tangentiellement à un cercle concentrique à un axe de référence dudit robot avec lequel est confondu l'axe de l'outil, et, qui, en travail, permettent à la partie dudit support portant l'outil de se déplacer par rapport audit axe de référence, est remarquable en ce que chacune desdites lames est reliée à l'une desdites parties du support d'outil par l'intermédiaire d'un montage à rotule ou analogue et à l'autre desdites parties par l'intermédiaire d'une articulation d'axe orthogonal audit axe de référence.

On remarquera que, par le document EP-A-0 036 912, on connaît déjà un support d'outil pour robot, du type comportant deux parties reliées entre elles par un ensemble de lames élastiques qui, au repos, sont disposées tangentiellement à un cercle concentrique à un axe de référence dudit robot avec lequel est confondu l'axe de l'outil et qui, en travail, permettent à ladite partie du support portant l'outil de se déplacer par rapport audit axe de référence. Cependant, dans ce document antérieur, le robot est destiné à l'assemblage, et non pas à l'usinage, de sorte que lorsque les lames élastiques sont déformées, l'axe de l'outil peut s'incliner par rapport à l'axe de référence. Ceci est même recommandé lorsque le support d'outil de ce document antérieur est destiné, par exemple, à introduire des goupilles dans des trous. Dans ce cas, cette structure de support d'outil permet de compenser les imprécisions de positions du robot. D'ailleurs, dans ce support d'outil connu, les lames élastiques sont reliées aux parties de support d'outil de manière rigide.

En revanche, dans le support d'outil conforme à la présente invention, il est absolument indispensable que l'outil d'usinage se déplace de façon que son axe reste parallèle à l'axe de référence, afin que le travail effectué soit correct. Ceci est obtenu grâce au montage à rotule ou analogue et auxdites articulations.

Avantageusement, dans le support d'outil selon l'invention, on prévoit quatre lames élastiques, deux à deux parallèles et deux à deux diamétralement opposées.

De préférence, lesdites lames élastiques sont suffisamment rigides pour compenser les efforts résultant des déplacements d'un guide, lié à l'outil, en appui sur un gabarit. Ces lames élastiques peuvent être réalisées en matériau composite, constitué de fibres résistantes (verre, carbone,...) enrobées dans une résine synthétique.

Il est alors nécessaire, pour reprendre le couple de torsion éventuelle de l'outil lors d'un déplacement plan sur plan (notamment dans le cas ou l'outil est une fraise), de prévoir, entre l'outil et le robot, un joint de Oldham. Un tel joint permet à l'axe de l'outil de se déplacer suivant deux directions orthogonales d'un plan orthogonal audit axe d'outil.

Par ailleurs, afin de limiter les efforts de contact entre le gabarit et le guide correspondant prévu sur le support de l'outil, il est avantageux de prévoir un roulement à billes ou analogue entre ledit guide et la partie dudit support d'outil, portant ledit outil.

Dans un mode de réalisation avantageux, le moteur entraînant l'outil en rotation est monté sur la partie dudit support portant ledit outil, dans l'espace délimité entre lesdites lames. Dans ce cas, il est nécessaire que le joint de Oldham soit disposé entre la partie dudit support portant ledit moteur et la partie dudit support reliée au robot.

Les figures du dessin annexé feront bien comprendre comment l'invention peut être réalisée.

La figure 1 est une vue en élévation, avec arrachement partiel, d'un mode de réalisation du support d'outil selon l'invention.

La figure 2 illustre schématiquement un joint de Oldham connu.

La figure 3 est une vue partielle en coupe du montage du guide de l'outil par rapport audit support d'outil.

Sur ces figures, des références identiques désignent des éléments semblables.

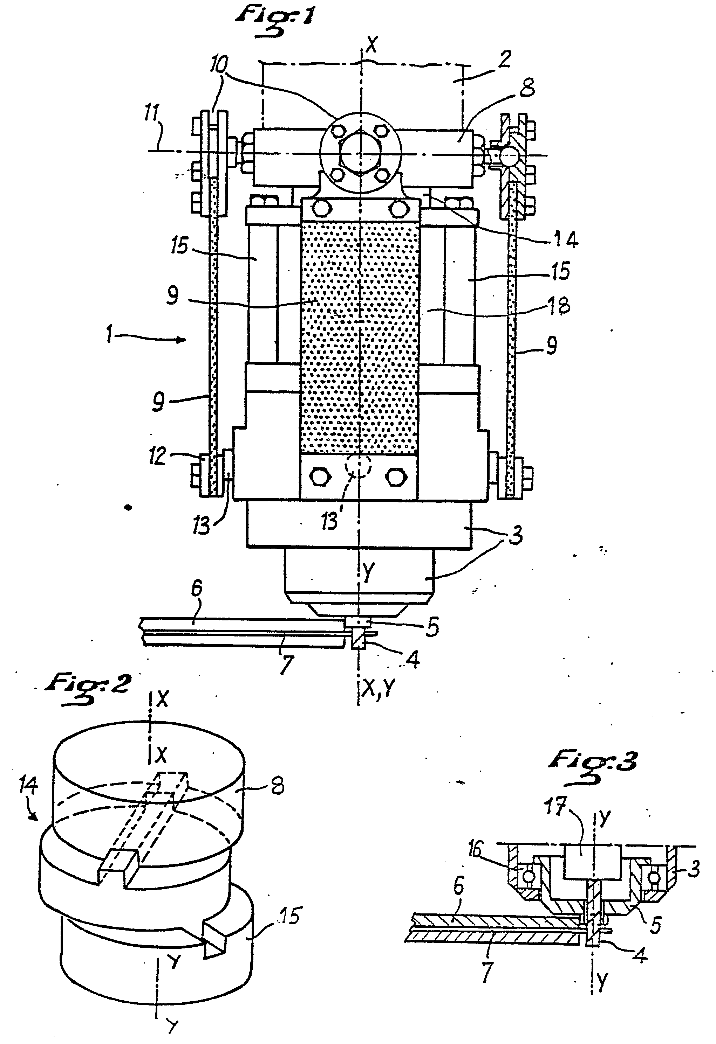

Le mode de réalisation de support d'outil selon l'invention, montré par la figure 1, porte la référence 1. Il est destiné à être fixé sur le poignet 2 d'un robot, seulement représenté par les traits mixtes. Ce poignet 2 présente un axe de référence X-X.

Le support d'outil 1 porte une partie 3, destinée à porter un outil 4, par exemple une fraise de détourage. Cette partie 3 présente un axe Y-Y et est associée à un guide cylindrique 5, disposé concentriquement à l'outil 4. Le guide 5 est destiné à coopérer avec un gabarit 8 pour permettre à l'outil 4 d'usiner de façon précise la pièce 7.

Au repos, l'axe X-X du poignet 2 et l'axe Y-Y de la partie 3 sont confondus.

Le support d'outil 1 comporte de plus une partie 8 pouvant être fixée au poignet 2 de toutes manières connues, non représentées.

Les parties 3 et 8 du support 1 sont reliées l'une à l'autre par quatre lames élastiques, deux à deux parallèles et deux à deux diamétralement opposées. Lorsque les axes X-X et Y-Y sont confondus, les quatre lames 9 sont disposées tangentiellement à un cercle concentrique à l'axe X-X dudit poignet 2. A leur partie supérieure, les quatre lames 9 sont reliées à la partie 8 du support d'outil par l'intermédiaire de montures 10 à rotule. Sur la figure 1, la monture 10 la plus à droite a été représentée en coupe pour montrer sa structure. Les montures 10 peuvent osciller en tous sens autour d'axes 11 deux à deux confondus, et deux à deux orthogonaux entre eux, ainsi qu'à l'axe X-X.

A leur partie inférieure, les lames 9 sont reliées à la partie 3 du support d'outil par l'intermédiaire de montures 12 articulées autour d'arbres 13 d'axes orthogonaux à l'axe X-X.

Selon une particularité de l'invention, les lames 9 sont en matériau composite et compensent les efforts dus au déplacement de l'outil 4 lorsque le guide 5 s'appuie sur le gabarit 6.

Pour reprendre le couple de torsion éventuelle entraîné par la rotation de l'outil 4 autour de son axe Y-Y, le support d'outil selon l'invention peut comporter un joint de Oldham.

La figure 2 représente schématiquement un tel joint 14. On peut voir que celui-ci permet à l'axe Y-Y de l'outil de se déplacer suivant deux directions orthogonales entre elles et orthogonales à l'axe X-X du support d'outil.

Ce joint 14 peut être monté entre la partie supérieure 8 du support d'outil et une structure 15 solidaire de la partie inférieure 3.

Par ailleurs, comme le montre la figure 3, on peut voir qu'un roulement à billes 16 ou analogue est prévu entre le guide 5 et la partie 3.

Ainsi, on peut limiter les efforts de frottement entre le gabarit 6 et le guide 5.

Le moteur 18, destiné à entraîner en rotation l'outil 4, peut être porté directement par la partie inférieure 3 et fixé sur celle-ci par l'intermédiaire de la structure 15. Dans ce cas, son arbre peut entraîner directement le porte-outils 17 et donc l'outil 4.

Dans ces conditions, on remarquera que l'on obtient un mode de réalisation particulièrement compact.

L'exemple de réalisation de l'invention illustré par les figures concerne plus particulièrement le détourage. Il va de soi que la présente invention n'est pas limitée à cette application particulière.

La figure 1 représente le mode de réalisation approximativement à l'échelle 1/2. Avec ce mode de réalisation, l'axe de l'outil Y-Y peut se déplacer sur un cylindre d'environ 15 mm de rayon, en restant constamment parallèle à lui-même.

Cette amplitude importante facilite la programmation par apprentissage.

Par mesure de sécurité, elle est limitée par des butées mécaniques non représentées sur les figures.

## Revendications

1. Support d'outil notamment pour robot, du type comportant deux parties (3, 8) reliées entre elles par un ensemble de lames élastiques (9) qui, au repos, sont disposées tangentiellement à un cercle concentrique à un axe de référence (X, X) dudit robot avec lequel est confondu l'axe (Y, Y) de l'outil, et, qui, en travail, permettent à la partie (3) dudit support portant l'outil (4) de se déplacer par rapport audit axe de référence, caractérisé en ce que chacune desdites lames (9) est reliée à l'une (8) desdites parties du support d'outil par l'intermédiaire d'un montage à rotule ou analogue (10) et à l'autre (3) desdites parties par l'intermédiaire d'une articulation (12) d'axe (13) orthogonal audit axe de référence.

2. Support d'outil selon la revendication 1, caractérisé en ce qu'il comporte quatre lames élastiques (9), deux à deux parallèles et deux à deux diamétralement opposées.

3. Support d'outil selon l'une quelconque des revendications 1 ou 2, caractérisé en ce que lesdites lames élastiques (9) sont suffisamment rigides pour compenser les efforts résultant des déplacements d'un guide (5), lié à l'outil (4), en appui sur un gabarit (6).

4. Support d'outil selon l'une quelconque des revendications 1 à 3, caractérisé en ce que lesdites lames (9) sont réalisées en matériau composite.

5. Support d'outil selon l'une quelconque des revendications 1 à 4, caractérisé en ce qu'il comporte un joint de Oldham ou analogue (14) entre l'outil (4) et le robot.

6. Support d'outil selon l'une quelconque des revendications 1 à 5, dans laquelle on prévoit un guide (5) autour de l'outil pour coopérer avec un gabarit, caractérisé en ce qu'il comporte un roulement à billes ou analogue (16) entre ledit guide (5) et la partie (3) dudit support d'outil, portant ledit outil (4).

7. Support d'outil selon l'une quelconque des revendications 1 à 6, caractérisé en ce que le moteur (18) entraînant l'outil (4) en rotation est monté sur la partie (3) dudit support portant ledit outil, dans l'espace délimité entre lesdites lames (9).

8. Support d'outil selon les revendications 5 et 7, caractérisé en ce que le joint de Oldham (14) est disposé entre la partie (3) supportant ledit moteur (18) et la partie (8) reliée au robot.

## Claims

1. Tool support, particularly for a robot, of the type comprising two parts (3, 8) connected together by an assembly of elastic plates (9) which, at rest, are disposed tagentially to a circle concentric to a reference axis (X-X) of said robot with which the axis (Y-Y) of the tool merges, and which, when working, enable that part (3) of said support which bears the tool (4) to move with respect to said reference axis, characterized in that each of said plates (9) is connected to one (8) of said parts of the tool support via a swivel joint assembly or the like (10) and to the other (3) of said parts via an articulation (12) whose axis (13) is at right angles to said reference axis.

2. Tool support according to claim 1, characterized in that it comprises four elastic plates (9), parallel in two's and diametrically opposite in two's.

3. Tool support according to any one of claims 1 or 2, characterized in that said elastic plates (9) are sufficiently rigid to compensate the efforts resulting from the displacements of a guide (5), connected to the tool (4), in abutment on a template (6).

4. Tool support according to any one of claims 1 to 3, characterized in that said plates (9) are made of composite material.

5. Tool support according to any one of claims 1 to 4, characterized in that it comprises an Oldham coupling or the like (14) between the tool (4) and the robot.

6. Tool support according to any one claims 1 to 5, in which a guide (5) is provided around the tool to cooperate with a template, characterized in that it comprises a ball bearing or the like (16) between said guide (5) and that part (3) of said tool support which bears said tool (4).

7. Tool support according to any one of claims 1 to 6, characterized in that the motor (18) driving the tool (4) in rotation is mounted on that part (3) of said support which bears said tool, in the space defined between said plates (9).

8. Tool support according to claims 5 and 7, characterized in that the Oldham coupling (14) is disposed between that part (3) supporting said motor (18) and that part (8) connected to the robot.

**Patentansprüche**

1. Werkzeughalterung, insbesondere für Roboter, mit zwei miteinander über elastische Lamellen (9) verbundenen Teilen (3, 8), wobei die elastischen Lamellen (9) in Ruhestellung tangential zu einem zu einer Bezugsachse (X, X) des Roboters konzentrischen Kreis verlaufen, wobei diese Achse (X, X) mit der Achse (Y, Y) des Werkzeugs zusammenfällt, und wobei die elastischen Lamellen (9) im Betrieb erlauben, daß der das Werkzeug (4) tragende Teil (3) der Halterung sich bezüglich dieser Bezugsachse verschieben kann, dadurch gekennzeichnet, daß jede dieser Lamellen (9) mit dem einen Teil (8) der Halterung über eine Kugelgelenkanordnung (10) oder dergleichen und mit dem anderen Teil (3) der Halterung über eine Schwenkanordnung (12) um eine zur Bezugsachse senkrechte Achse (13) verbunden ist.

2. Werkzeughalterung nach Anspruch 1, dadurch gekennzeichnet, daß sie vier elastische Lamellen (9) umfaßt, jeweils zwei parallel und jeweils zwei diametral gegenüberliegend.

3. Werkzeughalterung nach einem der Ansprüche 1 oder 2, dadurch gekennzeichnet, daß die elastischen Lamellen (9) genügend starr zur Kompensation der durch die Verschiebungen einer mit dem Werkzeug (4) verbundenen Führung (5) in Abstützung auf einem Bezugslineal (6) entstehenden Belastungen sind.

4. Werkzeughalterung nach einem der Ansprüche 1 bis 3, dadurch gekennzeichnet, daß die elastischen Lamellen (9) aus Verbundwerkstoff bestehen.

5. Werkzeughalterung nach einem der Ansprüche 1 bis 4, dadurch gekennzeichnet, daß sie eine Kreuzscheibenkupplung (14) oder dergleichen zwischen dem Werkzeug (4) und dem Roboter umfaßt.

6. Werkzeughalterung nach einem der Ansprüche 1 bis 5, wobei eine Führung (5) um das Werkzeug zum Zusammenwirken mit einem Bezugslineal vorgesehen ist, dadurch gekennzeichnet, daß sie eine Kugellagerung (16) oder dergleichen zwischen der Führung (5) und dem das Werkzeug (4) tragenden Teil (3) der Werkzeughalterung umfaßt.

7. Werkzeughalterung nach einem der Ansprüche 1 bis 6, dadurch gekennzeichnet, daß der das Werkzeug (4) in Drehung versetzende Motor (18) auf dem das Werkzeug tragenden Teil (3) der Halterung im von den Lamellen (9) begrenzten Raum angebracht ist.

8. Werkzeughalterung nach den Ansprüchen 5 und 7, dadurch gekennzeichnet, daß die Kreuzscheibenkupplung (14) zwischen dem den Motor (18) tragenden Teil (3) und dem mit dem Roboter verbundenen Teil (8) angeordnet ist.

0 190 957

Fig.1

Fig.2

Fig.3